# FASCICULE DE BREVET EUROPEEN

(11) **EP 2 209 434 B1**
(45) Date de publication et mention de la délivrance du brevet: **22.11.2017**
(21) Numéro de dépôt: 08845858.3
(22) Date de dépôt: 31.10.2008
(51) Int. Cl.: A61C 7/14

(54) **Procédé de réalisation d'un appareillage orthodontique individualisé**
Verfahren zur Herstellung einer patientenspezifischen orthodontischen Vorrichtung
Method for making a Customised Orthodontic Appliance

(30) Priorité: 31.10.2007 FR 0707686
(43) Date de publication de la demande: 28.07.2010
(73) Titulaire: H 32, 75017 Paris (FR)
(72) Inventeur: CURIEL, Patrick, F-92200 Neuilly sur Seine (FR); JULIE, Daniel, F-13015 Marseille (FR)
(74) Mandataire: Lavoix
(86) Numéro de dépôt international: PCT/FR2008/051970
(87) Numéro de publication internationale: WO 2009/056776

(56) Documents cités:
- EP-A- 0 696 444
- EP-A- 1 080 697
- EP-A- 1 702 582
- WO-A-94/10935
- US-A1- 2004 029 068
- US-A1- 2004 214 129

## Description

L'invention concerne un procédé de réalisation d'un appareillage orthodontique individualisé pour le traitement d'un patient, destiné principalement, mais non exclusivement, à être utilisé dans le cas d'une technique linguale, c'est-à-dire avec l'appareil disposé sur la face postérieure non visible des dents.

Classiquement, de tels appareils comportent :
- au moins un arc orthodontique, autrement dit un fil métallique exerçant sur les dents un effort tendant à les amener, à partir de leur position initiale insatisfaisante, dite « mal position », à une position finale satisfaisante, dite « position corrigée » ;
- et une série d'attaches, dites aussi couramment « brackets », pourvues chacune d'au moins une gorge pour la réception d'un arc orthodontique ; ces attaches sont fixées individuellement sur les dents du patient, dans une position déterminée permettant à l'arc orthodontique de transférer sur les dents les efforts nécessaires pour qu'elles passent de la mal position à la position corrigée pendant le traitement.

Le plus couramment, un ou plusieurs arcs orthodontiques, et avec lui ou eux une seule série d'attaches comportant chacune une ou plusieurs gorges, sont utilisés.

Les techniques orthodontiques linguales, qui ont l'avantage esthétique de laisser l'appareillage pratiquement invisible depuis l'extérieur, ont commencé à se développer vers 1980. Mais à l'époque elles reposaient sur une conception et une fabrication entièrement manuelles des appareils et leur mise en oeuvre était d'une très grande complexité. En effet, un élément important de la réussite du traitement est le bon positionnement de l'attache et de sa gorge sur la dent, puisque ce positionnement détermine l'orientation des efforts qui sont imposés à la dent correspondante, et donc les orientations de la dent dans les différentes directions de l'espace lorsqu'elle se trouvera en position finale corrigée. Ce positionnement est beaucoup plus délicat à réaliser en technique linguale qu'en technique dite labiale ou vestibulaire (où l'appareillage est disposé sur la face antérieure des dents), du fait de l'angulation importante des faces postérieures des dents. Cette angulation fait qu'une légère erreur de positionnement de l'attache peut placer la gorge dans une mauvaise position, incapable d'assurer la correction souhaitée de la position de la dent.

Une amélioration de cette technique a été constituée par le système dit « C.L.A.S.S. ». Il consiste à réaliser deux moulages en plâtre d'une empreinte de l'arcade et des dents en mal position du patient. L'un de ces moulages est conservé, l'autre est utilisé par le technicien pour réaliser un modèle de l'arcade avec les dents en position finale corrigée. A cet effet, les dents du moulage sont découpées une à une et repositionnées dans lesdites positions corrigées (étape dite couramment « set-up »). Puis le technicien place des attaches de formes standardisées sur une série de jauges préexistantes, qui lui paraissent les mieux adaptées à la courbure interne des dents dans des zones déterminées de l'arcade (par exemple face aux incisives, face à chacune des canines, face à chacune des séries de prémolaires et face à chacune des séries de molaires), et approche ces ensembles jauge-attaches des dents du moulage. Le résultat est que une ou certaines des attaches peuvent venir s'appuyer directement sur les dents du moulage, mais que des espaces vides existent entre les autres attaches et les autres dents. Ces espaces vides sont comblés par de la colle pour maintenir les attaches en place. On réalise alors une photocopie du moulage avec les attaches en place, à partir de laquelle on détermine la forme de l'arc orthodontique qui sera nécessaire pour placer les dents en position corrigée. Puis on emprisonne partiellement les attaches dans de petites coques en résine, on les place sur les dents du moulage en mal position à l'aide de dispositifs de maintien, et on réalise alors une clef de transfert en silicone de l'ensemble de l'arcade, à l'aide de laquelle on peut effectuer en une seule opération le transfert simultané par collage de toutes les attaches sur les dents du patient en mal position. L'arc orthodontique ayant la forme requise est ensuite placé dans les gorges des attaches, dans lesquelles il est ensuite bloqué par obturation de l'entrée de la gorge pour empêcher qu'il s'en échappe, et le traitement peut commencer.

Cette technique présente cependant plusieurs inconvénients. La masse de colle, grâce à laquelle l'espace vide entre l'attache et sa dent correspondante est comblé et la liaison attache-dent est assurée lors du traitement, ne peut être dimensionnée que de façon relativement approximative. Son matériau est susceptible de vieillir et de perdre ses caractéristiques mécaniques qui lui permettraient de jouer correctement son rôle dans le repositionnement des dents. Et en cas de rupture de ce matériau, il n'est pas possible de le restaurer dans sa forme initiale, en principe idéale. L'utilisation de jauges et de dispositifs de maintien préexistants, donc de dimensions standardisées, fait que les positionnements des attaches qu'ils permettent de réaliser ne sont pas toujours idéalement adaptés à la morphologie exacte de l'arcade du patient. De manière générale, ce procédé demande un temps de réalisation très important et des techniciens extrêmement qualifiés et minutieux pour sa mise en pratique dans les meilleures conditions afin d'obtenir les meilleurs résultats souhaitables. Son emploi est donc très coûteux, et contraignant pour le patient.

Les techniques informatiques ont pu apporter des perfectionnements importants dans la facilité de conception d'appareillages orthodontiques individualisés, spécifiques à chaque patient.

En particulier dans le document WO-A-03/068099, on enseigne de concevoir de manière individualisée un ensemble formé d'une part par l'image virtuelle d'une base de fixation à la dent, conçue numériquement à partir d'une image informatique de l'arcade du patient avec les dents en mal position, et d'autre part une image virtuelle d'une attache pourvue d'une gorge pour l'insertion de l'arc orthodontique, cette image étant puisée dans une bibliothèque virtuelle d'attaches de formes prédéterminées. On réalise ensuite une attache formée d'un corps unique résultant de la combinaison de ces deux images. Puis on conçoit un arc orthodontique, conformé à l'aide d'un dispositif spécial, destiné à relier les attaches et à amener les dents du patient dans la position corrigée. Cet arc présente inévitablement une forme complexe, en particulier parce qu'il est constitué d'une succession de multiples zones de rayon de courbure différents, ce qui est nécessaire pour relier les attaches, et s'étend généralement dans les trois dimensions de l'espace.

Les inconvénients de cette technique sont principalement les suivants. Le corps formant à la fois la base fixée sur la dent et l'attache portant la gorge pour l'insertion de l'arc étant conçu et fabriqué par prototypage rapide, il est difficile de réaliser des systèmes d'attache perfectionnés quant à la forme des attaches. En particulier, on peut difficilement utiliser des attaches auxquelles est intégré de construction un système de blocage de l'arc par clipsage ou autre, dites « attaches auto-ligaturantes ». Ce type d'attache, de plus en plus utilisé, apparaît comme un élément important pour la réussite complète du traitement. De plus, la conformation de l'arc orthodontique, de par sa complexité, doit être réalisée de manière robotisée, avec des matériaux présentant des caractéristiques précises pour qu'ils puissent prendre et conserver cette conformation. Et si une modification de la forme de l'arc apparaît nécessaire au début ou au cours du traitement, il n'est pas possible de la réaliser sans changer la totalité de l'arc. La modularité de l'appareillage est donc limitée. Enfin, la sinuosité importante de l'arc, qui, comme on l'a dit, peut généralement s'étendre sensiblement dans les trois dimensions de l'espace, limite considérablement ses possibilités de glissement à l'intérieur des gorges des attaches, alors même que cette possibilité de glissement serait favorable au bon déroulement du traitement pour accompagner le déplacement des dents jusqu'à leur position corrigée. EP 1 702 582 A divulgue un procédé similaire au procédé de la revendication 1, mais dans lequel aucune étape de conception numérique d'une pièce intermédiaire entre une attache pour attacher un arc orthodontique, et une base destinée à être fixée sur une face d'une dent, n'intervient. Le but de l'invention est de proposer un procédé de conception d'un appareillage orthodontique qui résolve mieux que les procédés existants, avec une plus grande facilité de mise en oeuvre et à un moindre coût, les problèmes techniques que l'on vient d'évoquer, en particulier pour les traitements en technique linguale.

A cet effet, l'invention a pour objet un procédé de réalisation d'un appareillage orthodontique individualisé pour le traitement d'un patient, ledit appareillage comportant au moins un arc orthodontique de traitement et une pluralité d'éléments comportant chacun une attache pourvue d'au moins une gorge dans laquelle ledit arc orthodontique peut être inséré, chaque attache étant destinée à être placée sur une pièce intermédiaire elle-même destinée à être placée sur une base destinée à être placée sur une face antérieure ou postérieure d'une dent, ledit procédé prévoyant de concevoir numériquement lesdites attaches, pièces intermédiaires et bases de façon individuelle après avoir formé une représentation en position corrigée de l'arcade et des faces des dents sur lesquelles lesdites bases doivent être fixées, caractérisé en ce que :
- on positionne un arc de construction relativement auxdites faces des dents sur ladite représentation, la géométrie dudit arc de construction étant homothétique de celle de l'arc orthodontique ;
- et on conçoit numériquement lesdits éléments de façon à leur faire présenter une enveloppe correspondant à la géométrie de l'espace qui, à l'issue du traitement orthodontique, séparerait la dent et l'arc de traitement lorsque la dent aurait pris sa position corrigée et que l'arc aurait retrouvé sa forme initiale ;
- et en ce que l'arc orthodontique de traitement s'étend dans un plan unique.

L'arc de construction peut présenter les mêmes forme et dimensions que l'arc orthodontique de traitement, ou être constitué par cet arc de traitement lui-même.

Ledit arc orthodontique peut être composé d'une portion unique de courbure sensiblement continue, ou d'une succession de portions présentant chacune une courbure sensiblement continue.

Lors de la conception numérique des éléments on peut concevoir la base pour qu'elle présente une face d'appui complémentaire à celle de la partie de la face de la dent sur laquelle elle doit être placée.

Lors de la conception numérique des éléments, on peut réaliser une fusion d'aux moins deux parties parmi les attaches, les pièces intermédiaires et les bases destinées à être attachées à des dents données, en vue de la fabrication ultérieure desdits éléments.

On peut ainsi réaliser la fusion de deux parties parmi les attaches, les pièces intermédiaires et les bases pour obtenir numériquement une pièce fusionnée, et prévoir des moyens d'assistance au positionnement de la pièce restante sur ladite pièce fusionnée.

Lesdits moyens d'assistance peuvent être constitués par des formes mâles-femelles ménagées aux interfaces des parties à fixer l'une à l'autre.

En outre, on peut réaliser une gouttière de transfert enrobant au moins partiellement chaque attache et la pièce intermédiaire correspondante pour le transfert de l'appareillage sur l'arcade du patient.

Ladite représentation de l'arcade et des faces des dents du patient peut être obtenue par numérisation tridimensionnelle d'une maquette de l'arcade des dents du patient en position corrigée.

Ledit appareillage peut être destiné à être placé en position linguale.

Comme on l'aura compris, l'invention repose sur l'utilisation couplée :
- de la formation par une méthode numérique, individuellement pour chaque dent, d'un ensemble formé par une base épousant la forme de la face de la dent sur laquelle elle sera fixée, d'une attache pourvue d'une gorge dans laquelle un arc orthodontique sera inséré, et d'une partie intermédiaire entre la base et l'attache, dont la géométrie correspond à l'espace qui, sans elle, serait laissé libre, à la fin du traitement, entre la dent correspondante dans sa position corrigée et l'arc orthodontique qui aura retrouvé sa forme initiale ; cet ensemble peut être réalisé sous forme d'une pièce unique intégrant tous les composants que l'on vient de citer, ou sous forme de deux ou trois pièces séparées que l'on fixe ensuite les unes aux autres ;
- et d'un arc orthodontique dont la forme et les dimensions peuvent être standardisées, présentant une courbure sensiblement continue à la possible exception de zones correspondant, par exemple, comme représenté sur les figures, à la transition entre des dents ou des groupes de dents de natures différentes (par exemple entre canines et prémolaires et/ou entre prémolaires et molaires), et définissant une succession de portions, ayant chacune une courbure sensiblement continue. En tout cas, cet arc n'a pas subi d'opération complexe de conformation destinée à adapter sa forme de manière fine face à chacune des dents du patient.

L'arc orthodontique peut donc être du type connu dit « straight wire » s'étendant dans un plan unique et fabriqué selon des modèles standardisés.

L'invention sera mieux comprise à la lecture de la description qui suit, faisant référence aux figures annexées suivantes :
- la figure 1 qui montre en vue de profil une dent sur la face postérieure non visible de laquelle une attache est fixée à une base elle-même fixée à la dent par l'intermédiaire d'une pièce de fixation, selon une forme de mise en oeuvre de l'invention ;
- les figures 2 et 3 qui montrent (figure 2) une représentation en perspective et (figure 3) en vue de dessus en coupe dans le plan P de la figure 2, de la position corrigée des dents d'une arcade, un arc de construction étant positionné sur la figure 3 dans le plan P par rapport aux bases qui sont en position de fixation sur ladite représentation ;
- la figure 4 illustrant l'étape d'adaptation de la pièce intermédiaire de fixation à la base, ladite pièce étant positionnée sur la base ;
- la figure 5 qui montre en perspective l'ensemble formé par la base, la pièce de fixation et une attache qui leur est associée.

On va à présent décrire un exemple de procédé de réalisation d'un appareillage orthodontique individualisé selon l'invention. Ledit appareillage comporte un arc orthodontique 1 et une pluralité d'attaches 2, en nombre égal au nombre de dents dont on veut corriger la position, lesdites attaches 2 étant chacune pourvues d'une gorge 3 dans laquelle ledit arc 1 peut être inséré comme il est classique. Ainsi, la résilience de l'arc orthodontique 1 qui tend à lui faire retrouver sa forme initiale, permet d'appliquer à chaque dent 4 un effort tendant à l'amener dans sa position corrigée désirée. Cet effort est transmis à la dent 4 par l'intermédiaire de l'attache 2, d'une pièce intermédiaire 5 fixée à l'attache 2, et d'une base 6 fixée d'une part à la face postérieure 7 de la dent 4 et d'autre part à la pièce intermédiaire 5.

Il est entendu que la description qui va suivre se fonde sur un exemple de mise en oeuvre de l'invention dans le cadre d'une technique linguale, donc avec l'appareillage situé du côté postérieur, normalement non visible, des dents 4. Mais au prix d'adaptations évidentes pour l'homme du métier, le même procédé selon l'invention pourra être utilisé pour réaliser des appareillages selon une technique labiale/vestibulaire, c'est-à-dire dans laquelle les attaches et l'arc orthodontique sont placés sur la face antérieure visible des dents 4. De même, l'homme du métier saura adapter le procédé au cas où on utiliserait plus d'un arc orthodontique sur une même arcade, ce qui impliquerait que chaque attache 2 comporte plusieurs gorges 3, ou que chaque dent 4 soit pourvue de plusieurs attaches 2 pour la réception d'une pluralité d'arcs 1.

Pour permettre la réalisation du traitement orthodontique, le positionnement de l'attache 2 et, en particulier, de sa gorge 3, doit être déterminé dans le but de faire exercer à l'arc 1 l'effort nécessaire au déplacement de la dent 4 en mal position vers sa position corrigée visée. Le dimensionnement de l'ensemble formé par l'attache 2, la pièce intermédiaire 5 et la base 6 doit également être déterminé à cet effet. Cela conduit à individualiser la conception et la réalisation de ces ensembles, mais, selon un des avantages de l'invention, possiblement sans que la géométrie initiale de l'arc 1 ne s'écarte d'une forme standardisée, inscrite dans un plan, et ne nécessite une mise en forme complexe de l'arc 1 avant son insertion dans les attaches 2.

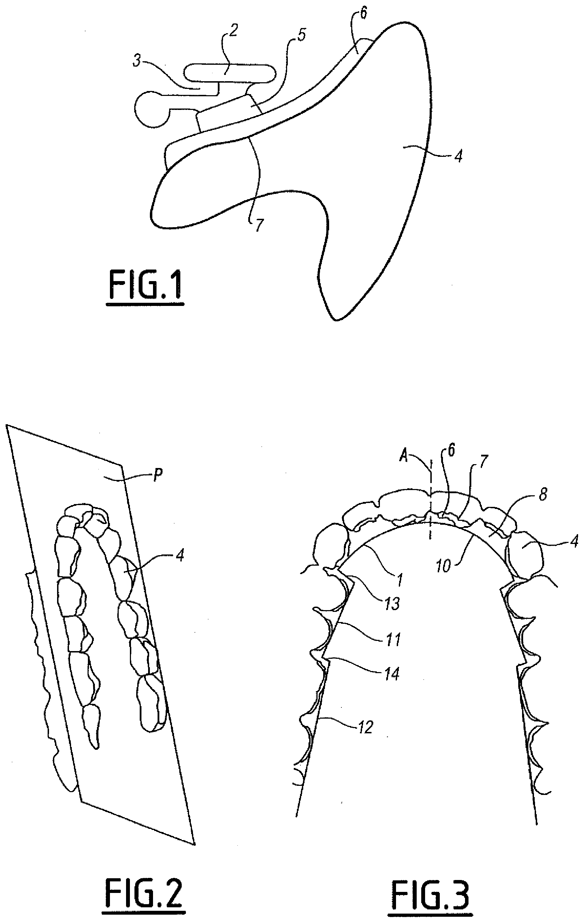

Pour ce faire, selon l'invention, on conçoit numériquement lesdits éléments, et notamment chaque pièce intermédiaire 5, de façon à leur faire présenter une enveloppe correspondant à la géométrie de l'espace 8 qui, à l'issue du traitement orthodontique, séparerait la face postérieure 7 de la dent 4 et l'arc 1 lorsque la dent 4 aurait pris sa position corrigée et que l'arc 1 aurait retrouvé sa forme initiale. De cette façon, notamment, l'épaisseur de la pièce intermédiaire 5 est définie, en fonction de la morphologie exacte de la dent 4 correspondante, de manière à compenser les différences d'épaisseur et les orientations des dents 4 du patient dans les diverses directions de l'espace afin qu'aucune modification préalable de la forme de l'arc 1 ne soit nécessaire pour réaliser l'alignement des dents 4 dans leur position corrigée. Egalement, la conception numérique des différentes pièces permet de préférence d'obtenir aisément un alignement des gorges 3 des attaches 2 selon un même plan, de sorte que l'arc 1 ne nécessite pas d'être déformé pour lui conférer une forme gauche (autrement dit non inscrite dans un plan P représenté sur la figure 2). On peut donc concevoir l'ensemble dans la perspective de l'utilisation d'arcs de formes simples et de dimensions standardisées, l'adaptation au cas particulier du patient se faisant notamment grâce au dimensionnement fin des pièces intermédiaires 5.

Dans une forme de réalisation de l'invention, lors de la conception numérique et de la fabrication, la base 6, la pièce intermédiaire 5 et l'attache 2 sont fusionnées en une pièce unique, que l'on fabrique par coulée dans un moule. L'avantage de cette technique est que la fusion numérique est simple à réaliser lors de la conception de l'appareillage, et permet à ce stade de modifier la forme de la partie de la pièce jouant le rôle de l'attache 2 pour l'adapter au mieux aux exigences morphologiques du patient. Cependant, la fabrication par coulée dans un moule impose que la partie d'attache 2 ait une forme relativement simple, ce qui peut exclure l'utilisation de certaines géométries d'attaches auto-ligaturantes qui seraient avantageuses comme on l'a dit plus haut.

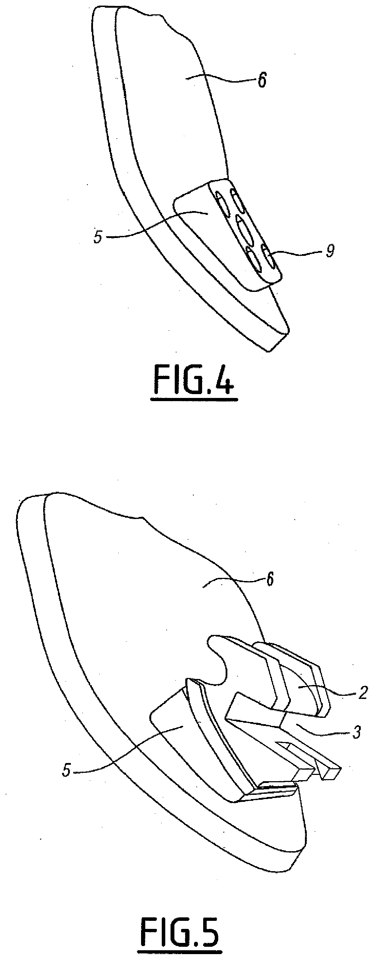

Dans une autre forme de réalisation de l'invention, les attaches 2, les pièces intermédiaires 5 et les bases 6 sont fabriquées séparément puis fixées les unes aux autres, par exemple par soudure, collage ou clipsage. On a alors la possibilité d'utiliser des attaches 2 de types standardisés, pouvant par exemple être identiques pour chaque groupe de dents 4. Comme ces attaches peuvent être réalisées par d'autres procédés que la coulée dans un moule, par exemple par usinage, elles peuvent prendre des formes complexes et précises, autorisant plus facilement, en particulier, l'utilisation de dispositifs auto-ligaturants pour le maintien de l'arc 1 dans les gorges 3. De même les pièces intermédiaires 5 et les bases 6 peuvent être réalisées par d'autres procédés que le moulage : usinage, frittage ou prototypage rapide. Cette variante, si elle est bien mise en oeuvre, peut conduire à la réalisation d'appareillages plus performants que la précédente. La durée et le coût de réalisation du dispositif sont, cependant, plus élevés que dans la variante précédente où tous les éléments fonctionnels sont fusionnés en une seule pièce. De plus, la fixation des éléments les uns aux autres est susceptible d'introduire des imprécisions dans leurs positionnements relatifs. Mais une parade à cet inconvénient consiste à prévoir sur chaque élément, lors de sa conception numérique, des moyens d'assistance à ces positionnements, tels que des formes mâles-femelles ménagées sur leurs surfaces de contact. Ils peuvent prendre la forme, comme cela est visible sur la figure 4, de logements 9 ménagés dans l'un des éléments (ici la pièce intermédiaire 5) et de plots correspondants à ces logements 9 ménagés sur l'élément qui doit être soudé à l'élément précédent (ici les plots sont ménagés sur la face inférieure de l'attache 2, non visible sur les figures). D'autres géométries que des systèmes logements-plots peuvent être envisagées, tels que des stries de formes complémentaires. Ces moyens de positionnement peuvent être ménagés non seulement aux interfaces entre les attaches 2 et les pièces intermédiaires 5, mais aussi aux interfaces entre les pièces intermédiaires 5 et les bases 6.

Dans d'autres formes de réalisation, on peut concilier les deux formes de réalisation précédentes, en ne fusionnant que deux des trois parties des éléments destinés à des dents 4 données lors de la conception numérique, à savoir :
- soit la base 6 et la pièce intermédiaire 5, l'attache 2 étant conçue et fabriquée séparément d'elles, puis fixée sur la pièce intermédiaire 5 ;
- soit la pièce intermédiaire 5 et l'attache 2, la base 6 étant conçue et réalisée séparément puis fixée sur la pièce intermédiaire 5.

De la même façon que ce qui a été précédemment décrit, des moyens d'assistance au positionnement relatif des parties à fixer l'une à l'autre peuvent être prévus là où ils seraient utiles.

Bien entendu, dans un même appareillage on peut utiliser sur les diverses dents 4 des éléments dont les parties ont été intégralement fusionnées lors de leur conception et/ou des éléments où deux parties ont été fusionnées et/ou des éléments où aucune partie n'a été fusionnée.

Les différents éléments et/ou leurs diverses parties sont conçus à partir d'une numérisation tridimensionnelle d'une maquette des dents 4 du patient en position corrigée, réalisée selon les techniques classiques précédemment décrites, par exemple par moulage de l'arcade de dents 4 en mal position, puis découpage et déplacement des dents 4 en position corrigée pour former la maquette. Après numérisation, la représentation de la maquette est transférée dans un logiciel de traitement d'images tridimensionnelles pour la mise en oeuvre de la suite du procédé. Mais en variante, la représentation des dents 4 en position corrigée peut être obtenue par des moyens purement numériques, à partir d'une numérisation des dents 4 du patient en mal position, dont le résultat est traité par un logiciel approprié pour aboutir à la représentation de l'arcade en position corrigée.

On peut prévoir que l'arc 1 puisse être mis en appui sur certaines dents 4 d'une manière quasi-directe, c'est-à-dire sans utiliser de pièce intermédiaire 5 entre l'attache 2 et la base 6, si cela s'avère possible au vu de la conception numérique de l'appareillage. Dans ce cas, c'est la base 6 elle-même qui joue le rôle de pièce intermédiaire 5, et sa face opposée à celle qui est au contact de la dent 4 peut être conformée en conséquence pour s'adapter à l'attache 2.

Comme on l'a dit, avantageusement cet arc 1 peut s'étendre dans un plan P unique, et présenter soit une courbure sensiblement continue sur toute sa longueur (donc être du type dit « straight wire »), soit, comme représenté sur la figure 3, une succession de portions 10, 11, 12 présentant elles-mêmes une courbure sensiblement continue, et reliées par un petit nombre de zones de transition 13, 14 de manière à permettre à l'arc 1 de s'approcher autant que possible des différentes dents 4 du patient lorsqu'elles se trouveront en position corrigée. Cette configuration permet de minimiser l'épaisseur d'au moins certaines des pièces intermédiaires 5, donc l'encombrement général du dispositif. On assure ainsi un meilleur confort au patient lors du traitement. Généralement cet arc 1 présente une symétrie par rapport à l'axe longitudinal médian (A) de l'arcade en position corrigée.

Une fois les éléments de l'appareillage destinés à être fixés sur les dents du patient réalisés selon l'une des techniques selon l'invention, on peut prévoir la réalisation d'une gouttière de transfert, par exemple en silicone, enrobant au moins partiellement chacun desdits éléments. Pour ce faire, on peut placer lesdits éléments sur une maquette de l'arcade des dents du patient en mal position, réalisée par exemple sur la base d'un moulage de ladite arcade. Ce placement est assuré au moyen d'une colle soluble ou de tout autre système autorisant un détachement aisé des éléments. Le caractère correct de ce placement peut être vérifié par l'utilisation à ce stade d'un arc orthodontique dit « arc de construction » que l'on place dans les gorges 3 des attaches 2. Cet arc présente une géométrie homothétique de celle de l'arc 1 qui sera utilisé lors du traitement, ou strictement identique à cette géométrie. Eventuellement, cet arc de construction est un arc identique à l'arc 1 qui sera employé lors du traitement, voire cet arc 1 lui-même, qui est donc alors utilisé comme arc de construction. Dans ce cas, le rapport d'homothétie entre l'arc de construction et l'arc de traitement 1 est tout simplement égal à 1. C'est ce cas qui est représenté sur la figure 3.

On obtient ainsi un modèle exact de ce que sera l'appareillage après son placement sur l'arcade du patient, et on peut procéder aux éventuelles rectifications qui seraient nécessaires. Ensuite, la gouttière est réalisée par moulage, ledit moulage intégrant les éléments. La gouttière est ensuite détachée de la maquette et transférée sur l'arcade du patient, sur les dents 4 de laquelle les éléments sont classiquement fixés par collage, en une seule opération, sans risque de défaut de positionnement. Puis la gouttière est désolidarisée des éléments et l'arc orthodontique 1 est placé et bloqué dans les gorges 3 des attaches 2 par des moyens classiques, de préférence intégrés aux attaches 2 qui sont alors dites « auto-ligaturantes ».

## Revendications

1. Procédé de réalisation d'un appareillage orthodontique individualisé pour le traitement d'un patient, ledit appareillage comportant au moins un arc orthodontique de traitement (1) et une pluralité d'éléments comportant chacun une attache (2) pourvue d'au moins une gorge (3) dans laquelle ledit arc orthodontique (1) peut être inséré, chaque attache (2) étant destinée à être placée sur une pièce intermédiaire (5) elle-même destinée à être placée sur une base (6) destinée à être placée sur une face (7) antérieure ou postérieure d'une dent (4), ledit procédé prévoyant de concevoir numériquement lesdites attaches (2), pièces intermédiaires (5) et bases (6) de façon individuelle après avoir formé une représentation en position corrigée de l'arcade et des faces (7) des dents (4) sur lesquelles lesdites bases (6) doivent être fixées, dans lequel :
- on positionne un arc de construction relativement auxdites faces (7) des dents (4) sur ladite représentation, la géométrie dudit arc de construction étant homothétique de celle de l'arc orthodontique de traitement (1) ;
- et on conçoit numériquement lesdits éléments de façon à leur faire présenter une enveloppe correspondant à la géométrie de l'espace (8) qui, à l'issue du traitement orthodontique, séparerait la dent (4) et l'arc (1) lorsque la dent (4) aurait pris sa position corrigée et que l'arc de traitement (1) aurait retrouvé sa forme initiale ;
- et l'arc orthodontique de traitement (1) s'étend dans un plan unique (P).

2. Procédé selon la revendication 1, **caractérisé en ce que** l'arc de construction présente les mêmes forme et dimensions que l'arc orthodontique de traitement (1), ou est constitué par cet arc de traitement (1) lui-même.

3. Procédé selon l'une des revendications 1 ou 2, **caractérisé en ce que** ledit arc orthodontique (1) est composé d'une portion unique de courbure sensiblement continue, ou d'une succession de portions (10, 11, 12) présentant chacune une courbure sensiblement continue.

4. Procédé selon l'une des revendications 1 à 3, **caractérisé en ce que**, lors de la conception numérique des éléments on conçoit la base (6) pour qu'elle présente une face d'appui complémentaire à celle de la partie de la face (7) de la dent (4) sur laquelle elle doit être placée.

5. Procédé selon l'une des revendications 1 à 4, **caractérisé en ce que** lors de la conception numérique des éléments, on réalise une fusion d'aux moins deux parties parmi les attaches (2), les pièces intermédiaires (5) et les bases (6), en vue de la fabrication ultérieure desdits éléments.

6. Procédé selon la revendication 5, **caractérisé en ce qu'**on réalise la fusion de deux parties parmi les attaches (2), les pièces intermédiaires (5) et les bases (6) pour obtenir numériquement une pièce fusionnée, et **en ce qu'**on prévoit des moyens d'assistance au positionnement de la pièce restante sur ladite pièce fusionnée.

7. Procédé selon la revendication 6, **caractérisé en ce que** lesdits moyens d'assistance sont constitués par des formes mâles-femelles ménagées aux interfaces des parties à fixer l'une à l'autre.

8. Procédé selon l'une des revendications 1 à 6, **caractérisé en ce qu'**en outre, on réalise une gouttière de transfert enrobant au moins partiellement chaque attache (2) et la pièce intermédiaire (5) correspondante pour le transfert de l'appareillage sur l'arcade du patient.

9. Procédé selon l'une des revendications 1 à 7, **caractérisé en ce que** ladite représentation de l'arcade et des faces (7) des dents (4) du patient est obtenue par numérisation tridimensionnelle d'une maquette de l'arcade des dents (4) du patient en position corrigée.

10. Procédé selon l'une des revendications 1 à 9, **caractérisé en ce que** ledit appareillage est destiné à être placé en position linguale.

## Patentansprüche

1. Verfahren zum Herstellen einer individualisierten orthodontischen Vorrichtung für die Behandlung eines Patienten, wobei die Vorrichtung wenigstens einen orthodontischen Behandlungsbogen (1) und mehrere Elemente, die jeweils eine Befestigung (2) enthalten, die mit wenigstens einer Kehle (3) versehen ist, in die der orthodontische Bogen (1) eingesetzt werden kann, umfasst, wobei jede Befestigung (2) dazu bestimmt ist, an einem Zwischenteil (5) angeordnet zu werden, das seinerseits dazu bestimmt ist, an einer Basis (6) angeordnet zu werden, die dazu bestimmt ist, auf einer vorderen oder hinteren Fläche (7) eines Zahns (4) angeordnet zu werden, wobei das Verfahren vorsieht, die Befestigungen (2), Zwischenteile (5) und Basen (6) auf individuelle Weise digital zu entwerfen, nachdem eine Darstellung des Arcus und der Flächen (7) der Zähne (4), an denen die Basen (6) befestigt werden sollen, an der korrigierten Position erzeugt worden ist, wobei:
- auf der Darstellung ein Konstruktionsbogen in Bezug auf die Flächen (7) der Zähne (4) positioniert wird, wobei die Geometrie des Konstruktionsbogens zu jener des orthodontischen Behandlungsbogens (1) homothetisch ist;
- die Elemente in der Weise digital entworfen werden, dass sie eine Einhüllende darstellen, die der Geometrie des Raums (8) entspricht, der am Ende der orthodontische Behandlung den Zahn (4) und den Bogen (1) trennen würde, wenn der Zahn (4) seine korrigierte Position eingenommen hätte und wenn der Behandlungsbogen (1) wieder seine ursprüngliche Form angenommen hätte; und
- der orthodontische Behandlungsbogen (1) sich in einer einzigen Ebene (P) erstreckt.

2. Verfahren nach Anspruch 1, **dadurch gekennzeichnet, dass** der Konstruktionsbogen die gleiche Form und die gleichen Abmessungen wie der orthodontische Behandlungsbogen (1) aufweist oder durch diesen Behandlungsbogen (1) selbst gebildet ist.

3. Verfahren nach einem der Ansprüche 1 oder 2, **dadurch gekennzeichnet, dass** der orthodontische Bogen (1) aus einem einzigen Abschnitt mit im Wesentlichen kontinuierlicher Krümmung oder aus einer Folge von Abschnitten (10, 11, 12), die jeweils eine im Wesentlichen kontinuierliche Krümmung aufweisen, aufgebaut ist.

4. Verfahren nach einem der Ansprüche 1 bis 3, **dadurch gekennzeichnet, dass** in dem digitalen Entwurf der Elemente die Basis (6) so entworfen wird, dass sie eine Abstützoberfläche aufweist, die zu jener des Teils der Fläche (7) des Zahns (4), auf der sie angeordnet werden soll, komplementär ist.

5. Verfahren nach einen der Ansprüche 1 bis 4, **dadurch gekennzeichnet, dass** in dem digitalen Entwurf der Elemente eine Vereinigung von wenigstens zwei Teilen unter den Befestigungen (2), den Zwischenteilen (5) und den Basen (6) im Hinblick auf die spätere Fertigung der Elemente vorgenommen wird.

6. Verfahren nach Anspruch 5, **dadurch gekennzeichnet, dass** die Vereinigung der beiden Teile unter den Befestigungen (2), den Zwischenteilen (5) und den Basen (6) vorgenommen wird, um ein vereinigtes Teil digital zu erhalten, und dass Mittel für die Unterstützung der Positionierung des verbleibenden Teils auf dem vereinigten Teil vorgesehen sind.

7. Verfahren nach Anspruch 6, **dadurch gekennzeichnet, dass** die Unterstützungsmittel durch Voll- und Hohlformen gebildet sind, die in den Grenzflächen der aneinander zu befestigenden Teile ausgebildet sind.

8. Verfahren nach einem der Ansprüche 1 bis 6, **dadurch gekennzeichnet, dass** außerdem eine Übertragungsrinne verwirklicht wird, die jede Befestigung (2) und das entsprechende Zwischenteil (5) wenigstens teilweise umhüllt, um die Vorrichtung auf den Arcus des Patienten zu übertragen.

9. Verfahren nach einem der Ansprüche 1 bis 7, **dadurch gekennzeichnet, dass** die Darstellung des Arcus und der Flächen (7) der Zähne (4) des Patienten durch dreidimensionale Digitalisierung eines Musters des Arcus der Zähne (4) des Patienten in der korrigierten Position erhalten wird.

10. Verfahren nach einem der Ansprüche 1 bis 9, **dadurch gekennzeichnet, dass** die Vorrichtung dazu bestimmt ist, an der Zungenposition angeordnet zu werden.

## Claims

1. Method for producing a customised orthodontic device for the treatment of a patient, the device comprising at least one treatment arch wire (1) and a plurality of elements which each comprise a bracket (2) which is provided with at least one groove (3), into which the arch wire (1) can be inserted, each bracket (2) being intended to be placed on an intermediate component (5) which is itself intended to be placed on a base (6) which is intended to be placed on an anterior or posterior face (7) of a tooth (4), the method making provision for the brackets (2), intermediate components (5) and bases (6) to be digitally designed in a customised manner after having formed a representation in the corrected position of the arch and the faces (7) of the teeth (4), to which the bases (6) must be fixed, wherein:
- a model arch wire is positioned relative to the faces (7) of the teeth (4) on the representation, the geometry of the model arch wire being homothetic with that of the treatment arch wire (1);
- and the elements are digitally designed so as to give them a shape which corresponds to the geometry of the space (8) which, following the orthodontic treatment, would separate the tooth (4) and the arch wire (1) when the tooth (4) had assumed its corrected position and the treatment arch wire (1) had returned to its initial shape;
- and the treatment arch wire (1) extends in a single plane (P) .

2. Method according to claim 1, **characterised in that** the model arch wire has the same shape and dimensions as the treatment arch wire (1) or is constituted by this treatment arch wire (1) itself.

3. Method according to any one of claims 1 or 2, **characterised in that** the arch wire (1) is composed of a single portion having a substantially continuous curvature, or a series of portions (10, 11, 12) which each have substantially continuous curvature.

4. Method according to any one of claims 1 to 3, **characterised in that**, during the digital design of the elements, the base (6) is designed so that it has a support face which complements that of the portion of the face (7) of the tooth (4) on which it must be placed.

5. Method according to any one of claims 1 to 4, **characterised in that**, during the digital design of the elements, there is carried out a merging of at least two components from the brackets (2), the intermediate components (5) and the bases (6) with a view to subsequent production of the elements.

6. Method according to claim 5, **characterised in that** two portions from the brackets (2), the intermediate components (5) and the bases (6) are merged in order to digitally obtain a merged component, and **in that** there are provided means for assisting the positioning of the remaining component on the merged component.

7. Method according to claim 6, **characterised in that** the assistance means are constituted by male-female shapes provided at the interfaces of the components to be fixed to each other.

8. Method according to any one of claims 1 to 6, **characterised in that** there is further produced a transfer channel which at least partially covers each bracket (2) and the corresponding intermediate component (5) to transfer the device to the arch of the patient.

9. Method according to any one of claims 1 to 7, **characterised in that** the representation of the arch and the faces (7) of the teeth (4) of the patient is obtained by means of three-dimensional digitisation of a model of the arch of the teeth (4) of the patient in the corrected position.

10. Method according to any one of claims 1 to 9, **characterised in that** the device is intended to be placed in a lingual position.
